# EUROPEAN PATENT APPLICATION

(11) **EP 1 689 183 A2**
(43) Date of publication of application: **09.08.2006**
(21) Application number: 05108168.5
(22) Date of filing: 06.09.2005
(51) Int. Cl.: H04N 7/167, G06F 21/00

(54) **Communication method between set-top box and smart card and interface module used for the same**

(30) Priority: 02.02.2005 KR 2005009419
(71) Applicant: Xcrypt, Inc., 150-170 Seoul (KR)
(72) Inventor: KIM, Gi-seop Keudong Bldg. 1101-14, 150-170, Seoul (KR)
(74) Representative: Hilleringmann, Jochen

(57) **Abstract**

Disclosed herein is a communication method between a set-top box and a smart card and interface module used for the same. In the communication method of the present invention, a Set-Top Box (STB) communicates with a smart card through a Recommended Standard (RS)-232C serial interface when providing information to the smart card and receiving an encryption key (Control Word: CW) from the smart card so as to descramble a scrambled Transport Stream (IS) after receiving the scrambled TS, in a case where a broadcast is received using the STB. The interface module of the present invention includes a smart card connector, a signal converter, a clock provider and a power/reset unit. The smart card connector accommodates the smart card, and transmits and receives signals to and from the smart card. The signal converter receives a signal from the STB through an input terminal, transmits the signal to the smarl card through the smart card connector, receives a signal from the smart card through the smart card connector, and transmits the signal to the STB through an output terminal, thus performing half duplex communication. The clock provider provides a clock signal to the smart card connector. The power/reset unit supplies power and a reset signal to the smart card connector.

## Description

### BACKGROUND OF THE INVENTION

### Field of the Invention

The present invention relates, in general, to a communication method, which enables communication between a set-top box and an external device, such as a smart card, and to a smart card interface module, which is an interface unit for the communication method and is connected to the set-top box through an RS-232C interface.

### Description of the Related Art

Set-top boxes for digital broadcast reception based on a Digital Video Broadcasting (DVB) standard are popularized in Europe. Such set-top boxes are classified into Free-to-Air (FTA) set-top boxes allowing a user to simply receive broadcasts, and Conditional Access System (CAS)-dedicated set-top boxes allowing a user to receive encrypted broadcasts as a paid service.

Generally, a conditional access system uses a smart card, which decrypts important encrypted information. A set-top box for paid broadcasting includes a smart card interface capable of allowing a smart card to be inserted thereinto, and reading and writing required information from and to the smart card. All conventional smart cards interface with a set-top box according to International Standard Organization (ISO) 7816 standards, which are international standards.

That is, a smart card is required to watch paid broadcasts. Further, a dedicated set-top box having a smart card interface is required to use the smart card.

However, in the case of a set-top box having a conditional access system, respective broadcasters have different specifications for set-top boxes. Therefore, there is a problem in that, if a user changes a broadcasting service provider, the entire set-top box must be replaced. In order to solve the problem, DVB standards define the specification of a Common Interface (CI) set-top box, so that a conditional access system can only be constructed as a Personal Computer Memory Card International Association (PCMCIA) card-type card module and can be separated from the set-top box.

In this case, a user desiring to change a service provider uses a previous set-top box without change and need only replace a CI module. Therefore, this method is economical for both a user and a service provider.

For this reason, a great number of CI set-top boxes have propagated to areas, such as Europe, the Middle East and North Africa. However, even in the case of CI set-top boxes, a user must purchase a CI module and insert a smart card into the CI module so as to watch paid broadcasts. Further, the CI module includes therein a smart card interface that meets ISO 7816 standards.

In order to meet ISO 7816 standards, an additional part for generating signals based on ISO 7816 standards is required, and a card holder for holding a card is required. That is, additional hardware costs are required.

Currently, both a set-top box, which has a smart card interface therein and allows the watching of paid broadcasts, and an FTA set-top box, which lacks the smart card interface and allows the watching of only free broadcasts, have commercialized in the market. However, since the FTA set-top box does not basically support the watching of paid broadcasts, a user must purchase a new set-top box to watch paid broadcasts under the current situation.

Even in the case of a CI set-top box, a user must additionally purchase a relatively expensive CI module to watch paid broadcasts.

### SUMMARY OF THE INVENTION

Accordingly, the present invention has been made keeping in mind the above problems occurring in the prior art, and an object of the present invention is to provide a communication method between a set-top box and an external device, such as a smart card.

Another object of the present invention is to provide an environment, in which paid broadcasts can be watched through an FTA set-top box widely provided already, by attaching a simple and inexpensive device to the FTA set-top box.

A further object of the present invention is to provide an environment in which paid broadcasts can be watched through a CI set-top box, by simply mounting a device cheaper than a CI module on the CI set-top box without mounting the CI module on the CI set-top box.

In order to accomplish the above object, the present invention provides a communication method between a Set-Top Box (STB) and a smart card, wherein the STB communicates with the smart card through a Recommended Standard (RS)-232C serial interface when providing information to the smart card and receiving an encryption key (Control Word: CW) from the smart card so as to descramble a scrambled Transport Stream (TS) after receiving the scrambled TS, in a case where the STB receives a broadcast using the STB.

Further, the present invention provides an interface module between a Set-Top Box (STB) and a smart card, comprising a smart card connector for accommodating the smart card, and transmitting and receiving signals to and from the smart card, a signal converter for receiving a signal from the STB through an input terminal, transmitting the signal to the smart card through the smart card connector, receiving a signal from the smart card through the smart card connector, and transmitting the signal to the STB through an output terminal, thus performing half duplex communication, a clock provider for providing a clock signal to the smart card connector, and a power/reset unit for supplying power and a reset signal to the smart card connector.

Preferably, the power/reset unit may be supplied with power using power of the STB, or using RS-232C serial signals provided by the STB. Further, the power/reset unit may be supplied with power using at least two of the RS-232C serial signals provided by the STB.

In addition, the present invention provides a Set-Top Box (STB) for receiving a paid broadcast using the communication method and the interface module.

### BRIEF DESCRIPTION OF THE DRAWINGS

- FIG. 1: is a block diagram showing the construction of a transmission unit of a digital broadcasting system;
- FIG. 2: is a block diagram of a set-top box having a smart card interface;
- FIG. 3: is a block diagram of a module according to the present invention;
- FIG. 4: is a circuit diagram showing an example of a signal converter of the module according to the present invention;
- FIG. 5: is a view showing a structure in which the module is mounted on a set-top box and a smart card is inserted into the module according to the present invention; and
- FIG. 6: is a circuit diagram showing an example of the supply of power to the module of the present invention, which shows a circuit for supplying power using certain signal lines of an RS-232C interface.

### DESCRIPTION OF THE PREFERRED EMBODIMENTS

Hereinafter, embodiments of the present invention will be described in detail with reference to the attached drawings.

First, a digital broadcasting system in which a module according to the present invention is used is described.

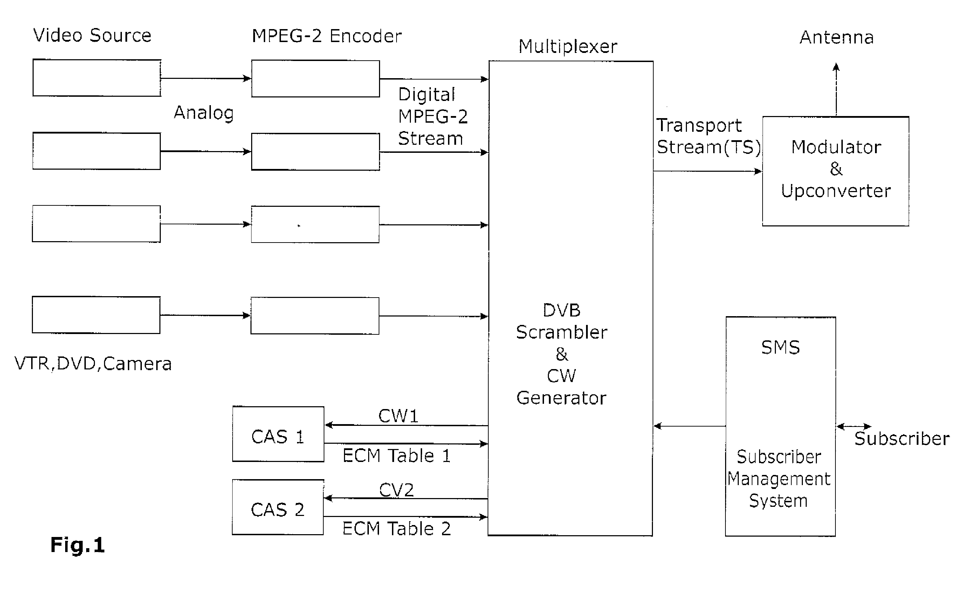

The entire construction of the digital broadcasting system is shown in FIG. 1. That is, most contents to be broadcasted are configured in an analog format, so that the contents are converted into digital-format contents and then encoded in MPEG-2 format. That is, an analog image received from a Video Tape Recorder (VTR), Digital Versatile Disk (DVD) or camera is converted into a digital MPEG-2 stream by an MPEG-2 encoder.

Most satellite broadcasting is currently encoded in MPEG-2 format and used. In the future, MPEG-4, having better compression, will generally be used to effectively utilize bandwidth.

In the case of digital broadcasting, several broadcasts can be transmitted together at a single frequency. If a plurality of broadcast contents are prepared as MPEG-2 streams by a plurality of encoders, a multiplexing process for integrating the MPEG-2 streams into a single stream is executed. While the process is executed, various pieces of information related to a system and to each broadcast (program) are added. Such pieces of information are designated as Program Specific Information/System Information (PSI/SI). A single integration stream, in which respective MPEG-2 streams and the PSI/SI information are integrated, is designated as a Transport Stream (TS).

If the integration TS is used for satellite broadcasting, TS is modulated using Quadrature Phase Shift Keying (QPSK) and then up-converted, and the up-converted TS is transmitted to a satellite through an antenna.

The above-described process is a typical transmission process in digital broadcasting.

In this case, a conditional access function can be used for each broadcast (program). The conditional access function is used by scrambling each program (broadcast) stream using an algorithm called common scrambling which is defined in the European digital broadcasting standard, that is, Digital Video Broadcasting (DVB).

The scrambled stream is descrambled using a specific key (Control Word: CW) and then restored to an original stream by a set-top box, thus allowing a user to watch a corresponding broadcast. This key (CW), which is used for scrambling, is encrypted by each Conditional Access System (CAS) and transmitted to the set-top box through the TS using a specific protocol.

The set-top box decrypts received information and detect a required CW, and descrambles the scrambled stream using the CW, thus allowing the user to watch a corresponding broadcast.

In order to add the conditional access function, the CAS must be added and connected to a multiplexer, as shown in FIG. 1. Generally, CW is used at 10-second intervals, and an MPEG-2 stream is scrambled using the CW. The CW is also transmitted to the CAS. If the CAS encrypts the CW using a unique algorithm, configures the encrypted CW in a certain format (Entitlement Control Message: ECM) defined in DVB, and transmits the ECM format data to the multiplexer, the multiplexer adds the data to TS and transmits the TS with the data.

A broadcast encrypted(scrambled) in this way is decrypted by a set-top box having the function of decrypting the encrypted broadcast(A broadcast scrambled in this way is descrambled by a set-top box having the function of descrambling), so that the user can watch the broadcast. The set-top box, capable of decrypting(descrambling) the encrypted(scrambled) broadcast, decrypts an ECM table on the basis of the standard provided by the CAS, and descrambles a scrambled MPEG-2 stream using CW generated in the ECM table, so that the broadcast can be watched. In this case, operations of detecting the ECM table through total protocols are processed by software included in the set-top box. The decryption of the ECM table is processed by a smart card that is provided by a CAS company to a broadcasting service provider and is to be provided by the broadcasting service provider to a subscriber.

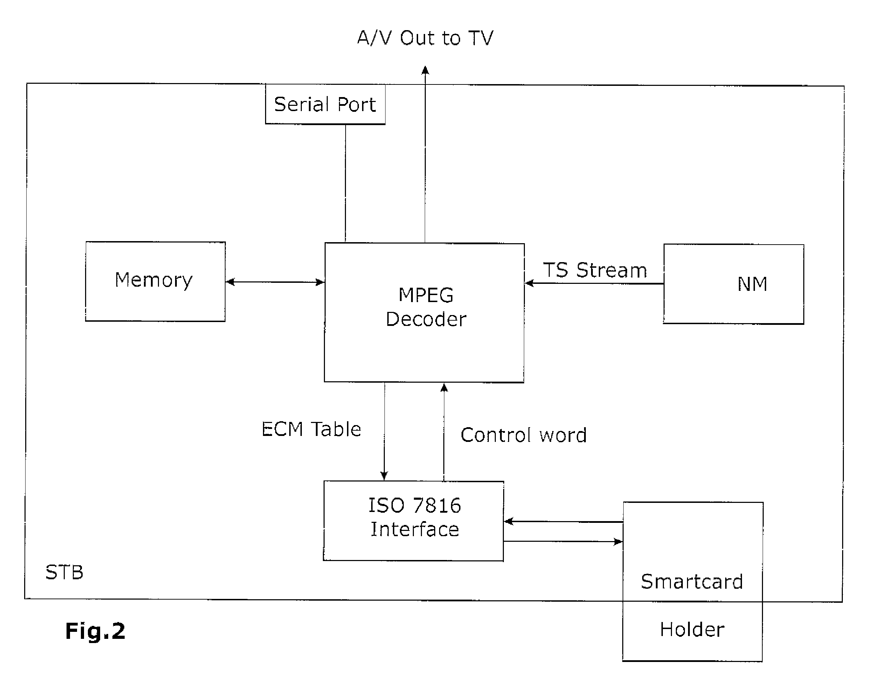

FIG. 2 is a block diagram of a Set-Top Box (STB) for paid broadcast reception, including a smart card interface. In FIG. 2, NIM is a network interface module. That is, in order to watch a paid broadcast, a set-top box capable of interfacing with a smart card is required, as shown in FIG. 2. A key (CW) used to descramble a broadcast stream is calculated and provided by a smart card. The STB continuously provides required information to the smart card, acquires the CW, and decrypts(descrambles) the broadcast, thus allowing the user to watch the broadcast.

The interface of the smart card is defined in ISO 7816 standards, which are international standards. The STB includes an interface chip that meets ISO 7816 standards, and a smart card interface that uses a smart card holder for physically supporting the smart card and connecting the smart card to the STB and is typically called a smart card slot.

However, a typical set-top box for free broadcast reception does not include a smart card interface. However, due to variation in broadcasting environments, the case of a small and medium-sized broadcasting service provider selling only smart cards, instead of collecting broadcasting subscribers and providing dedicated STBs and smart cards to the subscribers, is increasing. In order to be provided with the broadcasting service, an STB having therein software and a smart card interface is required. The software can be currently upgraded through a satellite using Over The Air (OTA) technology that is generalized, while hardware must be replaced.

All STBs include an RS-232C serial interface to update software or perform other functions. A method of connecting a smart card using a serial port is provided, so that the smart card can be used to watch paid broadcasts without replacing a set-top box.

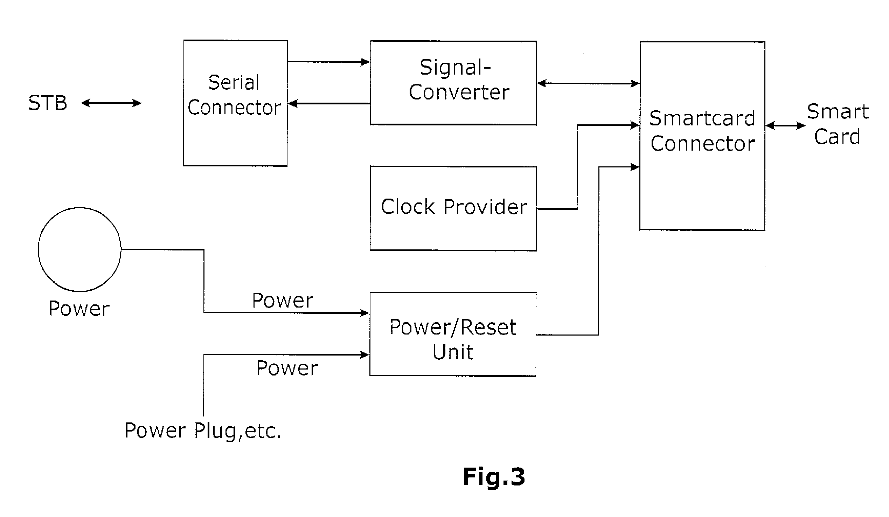

FIG. 3 is a block diagram of a module for connecting a serial port to an ISO 7816 interface. As shown in FIG. 3, the module includes a serial connector, a signal converter, a clock provider, a power/reset unit and a smart card connector.

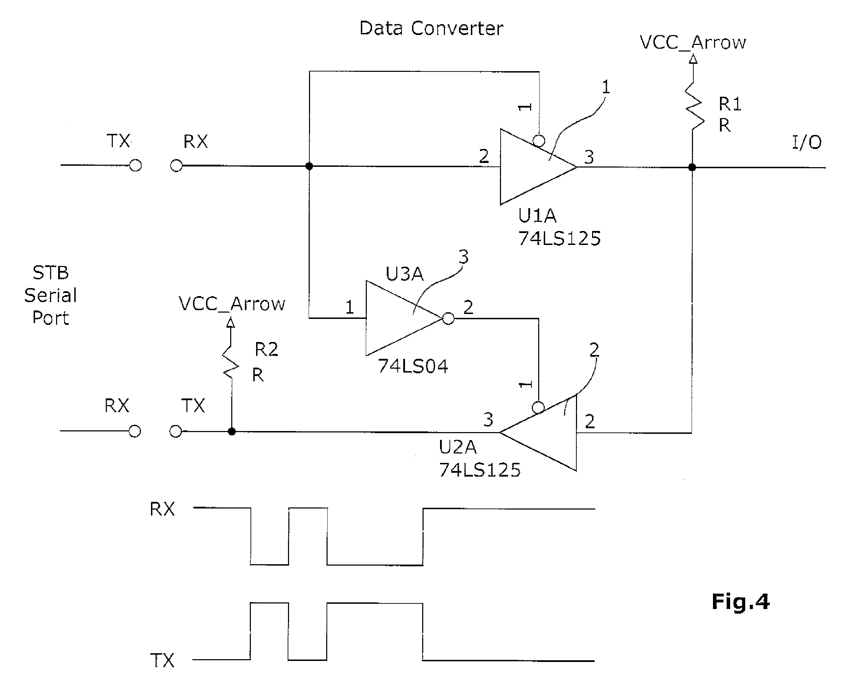

Generally, the serial port communicates using two signals Tx and Rx. However, the smart card exchanges data using a single I/O pin. Therefore, the signal converter analyzes and converts the difference between the two signals. As an example of the signal converter, the circuit of FIG. 4 can be used.

As described above, an RS-232C interface has two signals Tx and Rx. That is, the RS-232C interface has a transmission terminal and a reception terminal. Conversely, a smart card exchanges signals using a single I/O pin. In FIG. 4, Tx of the STB, that is, the transmission terminal of the STB, is connected to the reception terminal Rx of the signal converter. Similarly, the reception terminal Rx of the STB is connected to the transmission terminal Tx of the signal converter.

The transmission signal of the STB is in a "1" (high) state in a normal condition, and falls to a "0" (low) state and starts an operation when a signal is sensed(a data is to be sent). Further, communication is performed in a half-duplex communication manner, so that transmission and reception do not simultaneously occur. Therefore, as shown in FIG. 4, the output of a buffer controller 1 is connected to the input of a buffer controller 2, so that signals Rx and Tx are converted to a single I/O signal.

Typically, when the STB does not perform transmission, the transmission signal Tx of the STB (reception signal Rx of the signal converter) maintains a "1" state. Accordingly, the buffer controller 2 is activated by an inverter 3 and is capable of transmitting a signal(data) from the smart card to the STB.

When the STB transmits a signal(data) to the smart card, the buffer controller 1 is activated only when the signal from the STB falls to a "0" state, so that the signal is provided to the I/O pin of the smart card. At this time, since the buffer controller 2 is deactivated, the signal transmitted to the I/O pin of the smart card is prevented from being transmitted to the STB.

Using the above method, the smart card and the STB can communicate with each other.

Further, a clock signal must be provided to the smart card. In this case, since a clock signal cannot be provided through the serial port of the STB, a clock signal must be generated and provided. The clock provider performs this function.

For the smooth operation of the smart card, the power/reset unit for supplying power to the smart card and providing a stable reset signal is required. A method of supplying power to the power/reset unit can be performed using a method of utilizing external power through a power plug (adapter), etc.

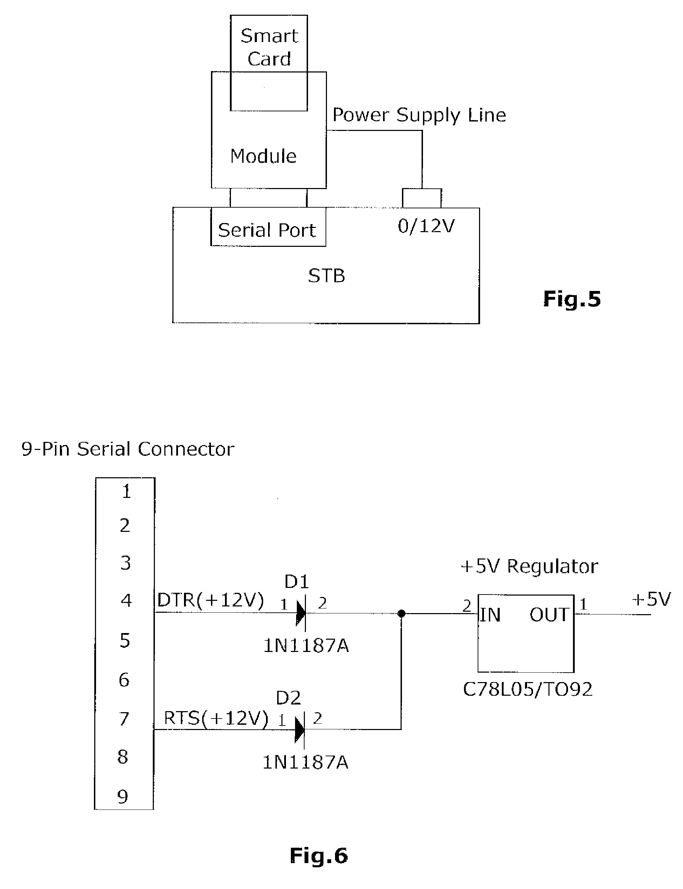

Further, a method of utilizing the power of the set-top box can be used so as to provide power to the power/reset unit. In this case, the power generated in the set-top box can be used without change. This case is depicted in FIG. 5.

Further, the power of the set-top box can be supplied through the serial port. This case is depicted in FIG 6. That is, a voltage of +5V can be generated using diodes and a regulator and then be supplied.

The generation and supply of power is described in detail. An RS-232C interface can use signals, such as a Data Terminal Ready (DTR) signal, a Request to Send (RTS) signal, a Clear to Send (CTS) signal or a Data Communication Equipment Ready (DCR) signal, so as to perform more precise communication.

These signals are not always required for actual data communication. Further, communication can be sufficiently performed using only two signals Rx and Tx without using the above signals, so as to communicate with the smart card. Therefore, in most serial communications, the signals DTR, RTS, DCR and CTS are not used. Therefore, if the STB supports the signals, the module of the present invention can be supplied with power using the above signals because the signals are not used in actual communication.

That is, since each of the above signals typically has a voltage of -12V or +12V, the signal is fixed to +12V, and then the module can be supplied with required power using the signal, as shown in FIG. 6. For example, because the signals DTR and RTS are provided by the STB, required power is generated using the two signals and a 5V regulator. In this case, the reason for supplying power using two signals is to Supplement the signals from the STB because the signals are weak.

The serial connector is a hardware connector connected to the serial port of the set-top box through a line.

Further, the smart card connector is a connector for allowing a smart card to be inserted thereinto and exchanging signals with the smart card.

As described above, the module including the signal converter, the clock provider and the power/reset unit of FIG. 3 is used, so that the smart card can be used through the serial port of the STB.

FIG. 4 illustrates an example of the usage of the module, which shows an example in which the module is inserted into the serial port of the STB, a smart card is inserted into the module, information about a key (CW), etc. is obtained from the smart card, and a stream is descrambled.

In the example, the module is connected to the serial port of a typical STB lacking a smart card interface, so that the smart card can be connected to the STB.

Further, since power cannot generally be supplied using a serial port, power is obtained from the power of the set-top box, as described above. That is, the above example shows that power is supplied using 0/12V power output terminal provided by many STBs.

As described above, the present invention uses the module that is connected to a serial port and allows a smart card to be connected to the STB, thus enabling a smart card to be used in an STB in which the smart card cannot be fundamentally used and a smart card interface circuit is not included.

Further, an embodiment in which the module is directly provided in an STB can also be considered. That is, the components of the module can be included in the STB, except components provided by the STB, such as a serial connector, power or clock provider, in the above module of the embodiment.

As described above, the present invention provides a communication method between a set-top box and a smart card, in which the smart card can be connected to a typical FTA Set-Top Box (STB) or CI STB, lacking smart card interface hardware, using a typical serial port, thus enabling the watching of paid broadcasts through the FTA STB, which was fundamentally impossible in the

### prior art.

Therefore, the present invention is advantageous in that a paid broadcasting service provider can extend a potential market for increasing the number of subscribers, and provides an opportunity of extending markets to STB manufacturing companies that produce FTA STBs or CI STBs lacking a smart card interface.

Further, the present invention has an excellent advantage in that a consumer having a typical FTA STB or CI STB can watch paid broadcasts without purchasing an additional STB or replacing a previous STB.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A communication method between a Set-Top Box (STB) and a smart card, wherein:
- the STB communicates with the smart card through a Recommended Standard (RS)-232C serial interface when providing information to the smart card and receiving an encryption key (Control Word: CW) from the smart card so as to descramble a scrambled Transport Stream (TS) receiving.

2. An interface module between a Set-Top Box (STB) and a smart card, comprising:
- a smart card connector for accommodating the smart card, and transmitting and receiving signals to and from the smart card;
- a signal converter for receiving a signal from the STB through an input terminal, transmitting the signal to the smart card through the smart card connector, receiving a signal from the smart card through the smart card connector, and transmitting the signal to the STB through an output terminal, thus performing half duplex communication;
- a clock provider for providing a clock signal to the smart card connector; and
- a power/reset unit for supplying power and a reset signal to the smart card connector.

3. The interface module according to claim 2, wherein the power/reset unit is supplied with power using power of the STB.

4. The interface module according to claim 2, wherein the power/reset unit is supplied with power using RS-232C serial signals provided by the STB.

5. The interface module according to claim 4, wherein the power/reset unit is supplied with power using at least two of the RS-232C serial signals provided by the STB.

6. A Set-Top Box (STB) for receiving paid broadcasts using the communication method according to claim 1.

7. A Set-Top Box (STB), comprising:
- a smart card connector for accommodating a smart card and transmitting and receiving signals to and from the smart card; and
- a signal converter for performing operations of receiving a signal from a -main body of the STB, transmitting the signal to the smart card through the smart card connector, receiving a signal from the smart card through the smart card connector and transmitting the signal to the main body of the STB, through half duplex communication using a Recommended Standard (RS)-232C interface.
